# EUROPÄISCHE PATENTSCHRIFT

(11) **EP 3 593 683 B1**
(45) Veröffentlichungstag und Bekanntmachung des Hinweises auf die Patenterteilung: **05.05.2021**
(21) Anmeldenummer: 19184328.3
(22) Anmeldetag: 04.07.2019
(51) Int. Cl.: A47J 36/32, A47L 11/40, G06F 3/01

(54) **STEUERUNG EINES HAUSGERÄTS**
CONTROL OF A HOUSEHOLD APPLIANCE
COMMANDE D'UN APPAREIL ÉLECTROMÉNAGER

(30) Priorität: 12.07.2018 DE 102018211587
(43) Veröffentlichungstag der Anmeldung: 15.01.2020
(60) Teilanmeldung: 20189238.7
(73) Patentinhaber: BSH Hausgeräte GmbH, 81739 München (DE)
(72) Erfinder: Koene, Philip, 81245 München (DE); Sagoo, Kiran Pal, 82256 Fürstenfeldbruck (DE); Schaefer, Frank, 82178 Puchheim (DE)

(56) Entgegenhaltungen:
- EP-A1- 3 120 741
- DE-A1-102014 107 163
- DE-A1-102014 222 752
- DE-A1-102015 117 310
- DE-A1-102015 221 860

## Beschreibung

Die Erfindung betrifft die Steuerung eines Hausgeräts. Insbesondere betrifft die Erfindung eine handfreie Interaktion eines Benutzers mit einem Hausgerät.

Ein Hausgerät ist zur Verwendung in einem Haushalt eingerichtet und kann insbesondere ein Küchengerät umfassen. Ein Benutzer, der in der Küche mit Lebensmitteln hantiert, kann oft seine Hände nicht zur Bedienung des Küchengeräts verwenden, ohne dieses zu verschmutzen. Umgekehrt ist es nicht wünschenswert, eine Hand des Benutzers durch Kontakt mit dem Küchengerät zu verunreinigen, sodass beispielsweise dort angesammelte Bakterien an die Lebensmittel gelangen.

Das Küchengerät kann mittels Sprachsteuerung handfrei bedient werden. Allerdings hat es sich gezeigt, dass die Sprachsteuerung nicht in allen Fällen zufriedenstellende Ergebnisse liefert. Schwierig kann eine Bedienung des Hausgeräts bei stärkeren Hintergrundgeräuschen oder mehreren sich unterhaltenden Personen werden. Gelegentlich reagiert die Sprachsteuerung, vom Benutzer unbeabsichtigt, auf eine vermeintliche Anweisung oder verwirft eine tatsächlich gegebene Anweisung. Das Hausgerät kann bei falscher Steuerung eine Gefahr für den Benutzer darstellen, sodass die Sprachsteuerung als alleinige Interaktionsmethode riskant sein kann.

Aus der DE 10 2015 117 310 A1 ist ein Verfahren zur Ansteuerung einer Innenbeleuchtung eines Gargeräts vorbekannt, das eine Blickrichtung berücksichtigen kann. Die DE 10 2015 221 860 A1 befasst sich mit einer Datenbrille, die einem Nutzer Zustandsdaten von Hausgeräten einblenden kann.

Es besteht daher Bedarf an einem verbesserten Interaktionskonzept zwischen einem Benutzer und einem Hausgerät. Die vorliegende Erfindung erfüllt diesen Bedarf mittels der Gegenstände der unabhängigen Ansprüche. Unteransprüche geben bevorzugte Ausführungsformen wieder.

Ein erfindungsgemäßes Verfahren zum Steuern eines Hausgeräts in einem Haushalt umfasst Schritte des Erfassens eines Betriebszustands des Hausgeräts; des Abtastens eines Benutzers des Hausgeräts; des Bestimmens einer Blickrichtung des Benutzers; und des Steuerns des Hausgeräts in Abhängigkeit des Betriebszustands und der erkannten Blickrichtung.

Das Hausgerät kann vorzugsweise handfrei bedient werden, sodass eine erforderliche Hygiene aufrecht erhalten sein kann. Der Benutzer kann das Hausgerät über eine gewisse Entfernung hinweg steuern. Durch das Verknüpfen des Betriebszustands mit der Blickrichtung kann eine im vorliegenden Kontext sinnvolle Steuerung des Hausgeräts erfolgen. Die Steuerung des Hausgeräts kann besonders intuitiv sein. Die Steuerung des Hausgeräts kann in ein übergeordnetes Steuerkonzept integriert sein, das die Steuerung mehrerer Hausgeräte erlauben kann.

Das Hausgerät ist bevorzugt elektrisch betreibbar, umfasst einen Herd und kann zusätzlich insbesondere ein Küchengerät wie eine Dunstabzugshaube, einen Ofen, oder eine Mikrowelle umfassen. Auch ein elektrisches Kleingerät wie eine Rühr- oder Schneidemaschine, ein Toaster oder eine Kaffeemaschine kann umfasst sein. Ferner kann das Hausgerät beispielsweise einen Geschirrspüler, eine Waschmaschine oder einen Wäschetrockner umfassen. In einigen Ausführungsformen ist das Hausgerät robotisch ausgeführt, kann sich also im Bereich des Haushalts selbst bewegen oder verfügt über einen beweglichen Aktor. Optional kann auch ein elektrisches Werkzeug als Hausgerät aufgefasst werden.

Bevorzugt wird die Blickrichtung des Benutzers auf der Basis einer optischen Abtastung eines oder beider Augen des Benutzers bestimmt. Die Abtastung erfolgt bevorzugt aus einer gegenüber dem Haushalt festgelegten Position. Dadurch kann ein am Kopf des Benutzers montierter Sensor entfallen. Außerdem kann es leichter sein, die Position und/oder Blickrichtung des Auges des Benutzers von einer Position aus zu bestimmen, die gegenüber dem Haushalt unveränderlich ist. Der Sensor kann am Hausgerät angebracht sein, wobei das Hausgerät gegenüber dem Haushalt fest oder mobil ausgelegt sein kann. Gegebenenfalls kann die Bestimmung der Position und/oder Blickrichtung kalibriert werden, insbesondere nachdem der Sensor gegenüber dem Haushalt bewegt wurde.

Der Sensor kann insbesondere eine Tiefenkamera umfassen, die auf der Basis der Ausbreitungsgeschwindigkeit von Licht oder auf der Basis einer Überlagerung mehrerer aus unterschiedlichen Positionen aufgenommener Bilder arbeitet. Insbesondere kann mittels des Sensors eine Position des Auges bezüglich des Haushalts bestimmt werden. Außerdem kann die Krümmung der Hornhaut des Auges erfasst werden, um die Richtung zu bestimmen, in die der Benutzer blickt.

Bevorzugt wird ein Objekt bestimmt, das der Benutzer anblickt. Vom Auge aus kann eine Halbgerade entlang der Blickrichtung bestimmt werden. Das erste Objekt, welches die Halbgerade schneidet, kann das vom Benutzer angeblickte Objekt umfassen. Das Objekt kann einen Gegenstand oder einen Abschnitt eines Gegenstands umfassen. Der Abschnitt kann auch als Punkt aufgefasst werden. In einer Ausführungsform können dreidimensionale Koordinaten desjenigen Punkts bestimmt werden, an welchem die Halbgerade das erste Objekt schneidet. So kann insbesondere bestimmt werden, an welche Stelle eines Gegenstands der Benutzer blickt.

Das Objekt kann eine vorbestimmte Steuerfläche umfassen, wobei das Hausgerät mittels einer der Steuerfläche zugeordneten, vorbestimmten Funktion gesteuert wird. Die Steuerfläche kann fest vorbestimmt sein oder dynamisch gebildet sein. In einer Ausführungsform kann ein insbesondere optischer Hinweis auf die Steuerfläche an den Benutzer ausgegeben werden. Beispielsweise kann ein virtuelles Bedienelement an einer beliebigen Oberfläche angezeigt werden. Blickt der Benutzer auf dieses Bedienelement, so kann die vorbestimmte Funktion ausgelöst werden. Dabei kann die Funktion beispielsweise symbolisch oder textuell an der Steuerfläche angegeben sein. Beispielsweise kann eine Steuerfläche vorgesehen sein, die ein Ausschalten-Symbol trägt, wobei die mit der Steuerfläche verbundene Funktion das Ausschalten des Haushaltsgeräts - oder eines vorbestimmten anderen Haushaltsgeräts - betrifft.

Das Hausgerät kann in Richtung des durch den Benutzer angeblickten Objekts bewegt werden. Dies ist insbesondere sinnvoll bei einem mobilen Hausgerät wie einem autonomen Bodenreiniger oder einem autonomen Staubsauger. In unterschiedlichen Ausführungsformen kann sich das Hausgerät von einem Objekt, das der Benutzer anblickt, entfernen oder sich dorthin bewegen. Das Hausgerät kann so beispielsweise dazu angewiesen werden, eine vorbestimmte Position oder Fläche zu meiden oder eine vorbestimmte Bearbeitung an einer anderen Position oder Fläche auszuüben.

Das Hausgerät kann zur Bearbeitung eines Objekts in einem Bearbeitungsbereich eingerichtet sein, wobei die Bearbeitung durch das Hausgerät reduziert werden kann, falls bestimmt wird, dass die Blickrichtung des Benutzers außerhalb des Bearbeitungsbereichs liegt. Das bearbeitete Objekt kann beispielsweise Schlagsahne in einer Rührmaschine, einen Kuchen in einem Ofen oder einen Topf auf einem Herd umfassen. Insbesondere dann, wenn der Betriebszustand des Hausgeräts auf einen heiklen Bearbeitungsschritt hinweist, kann das Reduzieren bei Aufmerksamkeitsmangel des Benutzers einen Schaden vermeiden. Die Schlagsahne kann steif, aber nicht zu Butter geschlagen werden, der Kuchen kann braun werden, aber nicht verbrennen oder der Inhalt des Topfes kann erwärmt werden, ohne am Topfboden anzulegen. Je nach Art und Bearbeitungsvorgang des Hausgeräts kann das Reduzieren beispielsweise ein Unterbrechen oder Abbrechen der Bearbeitung, ein Verringern einer aufgebrachten Leistung oder Wärme oder ein Verlangsamen einer Bewegung des Hausgeräts umfassen.

Ein erfindungsgemäßes Hausgerät umfasst eine erste Abtasteinrichtung zur Erfassung eines Betriebszustands des Hausgeräts; eine zweite Abtasteinrichtung zur Abtastung eines Auges eines Benutzers; und eine Verarbeitungseinrichtung. Dabei ist die Verarbeitungseinrichtung dazu eingerichtet, eine Blickrichtung des Benutzers zu bestimmen und das Hausgerät in Abhängigkeit des Betriebszustands und der erkannten Blickrichtung zu steuern.

Die Verarbeitungseinrichtung kann dazu eingerichtet sein, ein hierin beschriebenes Verfahren ganz oder teilweise auszuführen. Dazu kann die Verarbeitungseinrichtung einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Das Hausgerät kann einen Projektor zur Wiedergabe visueller Daten auf eine Fläche umfassen, wobei die Wiedergabe von Daten durch den Projektor gesteuert wird. Insbesondere kann der Projektor eine oder mehrere virtuelle Bedienelemente auf die Fläche projizieren und eine Funktion, die einer vom Benutzer angeblickten Fläche zugeordnet ist, kann daraufhin aktiviert werden. Der Projektor kann aber auch beispielsweise eine Diavorführung oder einen Film wiedergeben. Beide können dem Benutzer etwa Schritte eines Kochrezepts darstellen. Die Wiedergabe kann durch die Blickrichtung gesteuert werden, beispielsweise durch Pausieren oder Wiedergeben, abbrechen, vorwärts oder rückwärts suchen.

Das Hausgerät kann ferner eine Einrichtung zur Erfassung einer gesprochenen Anweisung umfassen, wobei eine Anweisung nur erfasst wird, nachdem der Benutzer ein vorbestimmtes Objekt angeblickt hat. So kann eine Sprachsteuerung mit einer hierin beschriebenen Blickrichtungserkennung oder Blicksteuerung kombiniert werden. Der Benutzer muss nicht mehr ein bestimmtes Schlüsselwort sprechen, um die Sprachsteuerung zu aktivieren. Die Bedienung des Hausgeräts kann so sicherer sein; eine durchgeführte Steuerung kann zuverlässiger einer Intention des Benutzers folgen.

Das Hausgerät umfasst einen Herd mit einer Oberfläche zum Abstellen eines Topfs. Dabei kann die Blickrichtung bezüglich der Oberfläche bestimmt werden, um etwa eine vorbestimmte Steuerfläche zu aktivieren. So kann der Herd gesteuert werden. Alternativ oder zusätzlich wird die Blickrichtung bezüglich eines auf der Oberfläche abgestellten Topfs bestimmt. Dadurch kann einer von mehreren Töpfen vom Benutzer ausgewählt werden. Eine dem Topf zugeordnete Einstellung, insbesondere bezüglich einer Heizleistung, kann anschließend gesteuert werden.

Das Hausgerät kann auch ein Kühlgerät mit einem Innenraum zur Aufnahme von Nahrungsmitteln umfassen. Dabei umfasst das Kühlgerät eine Kamera zur Bereitstellung eines Bilds des Innenraums und eine Anzeigevorrichtung zur Anzeige eines Bilds. Die Steuerung des Hausgeräts umfasst die Steuerung des Anzeigens auf der Anzeigevorrichtung. Beispielsweise kann mittels Blickrichtungserkennung einer von mehreren Kameras ausgewählt werden, sodass die Anzeigevorrichtung unterschiedliche Ansichten des Innenraums anzeigen kann. Außerdem kann die Anzeigevorrichtung nur aktiv sein, wenn der Blick des Benutzers auf sie fällt. Andernfalls kann die Anzeigevorrichtung beispielsweise optisch unauffällig in eine Oberfläche des Kühlgeräts integriert sein.

Das Hausgerät kann ein Elektrowerkzeug umfassen, wobei die Blickrichtung bezüglich eines Arbeitsbereichs des Elektrowerkzeugs bestimmt wird. Das Elektrowerkzeug kann beispielsweise eine Kreissäge, eine Stichsäge, einen Bohrer oder ein anderes Bearbeitungsgerät umfassen. Wandert der Blick des Benutzers vom Arbeitsbereich des Elektrowerkzeugs weg, insbesondere länger als eine vorbestimmte Dauer, so kann ein Warnsignal ausgegeben werden oder das Elektrowerkzeug kann in seiner Leistung reduziert oder abgeschaltet werden. Ein durch Unachtsamkeit bedingter Unfall kann so vermieden werden.

Das Hausgerät kann auch ein Reinigungsgerät zur Reinigung einer Bodenfläche umfassen, wobei die Blickrichtung bezüglich eines Abschnitts der Bodenfläche bestimmt wird und das Reinigungsgerät zur Reinigung des Abschnitts gesteuert wird. So kann der Benutzer leicht und unaufdringlich Anweisungen zur Reinigung der Bodenfläche geben. In einer weiteren Variante kann der Benutzer auch auf einen Abschnitt der Bodenfläche blicken, die das Reinigungsgerät anschließend meidet. Beispielsweise kann eine Laufstraße in einem Zimmer des Haushalts auf diese Weise markiert werden, wenn sich während eines Reinigungsvorgangs Personen in diesem Bereich bewegen können.

Ausführungsformen der Erfindung werden nun unter Bezug auf die beiliegenden Figuren - beispielhaft und nicht bechränkend - genauer beschrieben, in denen:
- Figur 1: ein System mit einem Hausgerät;
- Figur 2: ein Ablaufdiagramm eines Verfahrens zum Steuern eines Hausgeräts;
- Figur 3: ein erstes steuerbares Hausgerät;
- Figur 4: ein zweites steuerbares Hausgerät;
- Figur 5: ein drittes steuerbares Hausgerät;
- Figur 6: ein viertes steuerbares Hausgerät;
- Figur 7: ein fünftes steuerbares Hausgerät;
- Figur 8: ein sechstes steuerbares Hausgerät; und
- Figur 9: ein siebtes steuerbares Hausgerät;
darstellt.

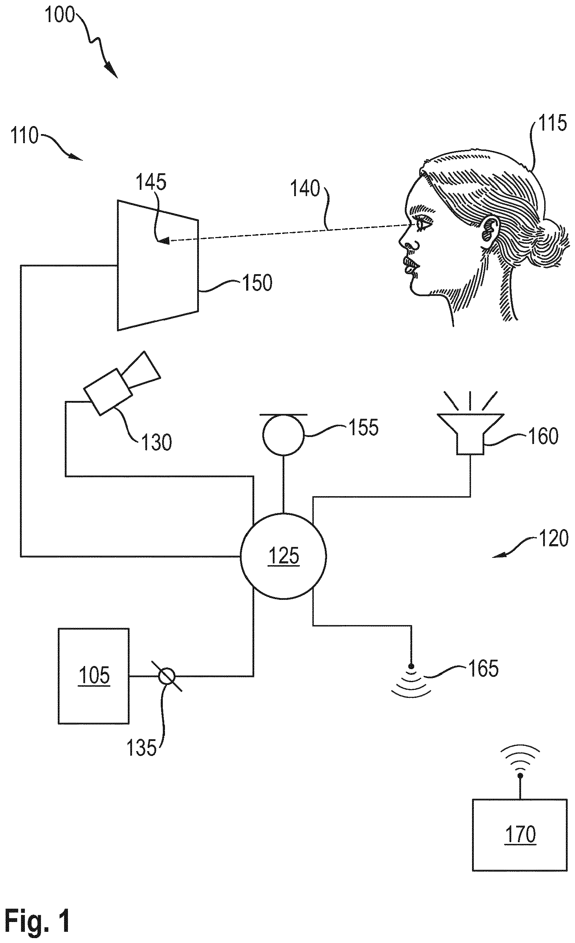

Figur 1 zeigt ein System 100 mit einem Hausgerät 105 in einem Haushalt 110. Das Hausgerät 105 ist dazu eingerichtet, eine vorbestimmte Aufgabe im Haushalt 110 durchzuführen oder zu unterstützen, beispielsweise Reinigen oder Kochen. Dazu kann das Hausgerät 105 zur Interaktion mit einem Benutzer 115 eine eigene Schnittstelle aufweisen, die beispielsweise eine Eingabevorrichtung wie einen Schalter oder Taste und/oder eine Ausgabevorrichtung wie eine Lampe oder LED umfassen kann. Es wird vorgeschlagen, die Interaktion mit dem Benutzer auf verbesserte Weise mittels einer Vorrichtung 120 zu steuern. Dabei kann die Vorrichtung 120 eigenständig ausgeführt oder teilweise oder ganz vom Hausgerät 105 umfasst sein kann.

Die Vorrichtung 120 umfasst eine Verarbeitungseinrichtung 125, die mit einem Sensor 130 zur Bestimmung einer Blickrichtung des Benutzers 115 des Hausgeräts 105 und einem Sensor oder einer Schnittstelle 135 verbunden ist, um einen Betriebszustand des Hausgeräts 105 zu erfassen. Die Blickrichtung wird üblicherweise mittels einer Kombination von Bildern einer Tiefenkamera und einer zweidimensionalen Kamera bestimmt. Die Tiefenkamera erfasst beispielsweise eine Position des Kopfes und der Augäpfel des Benutzers 115. Mit der 2D-Kamera kann die Iris am Auge lokalisiert werden. In Kombination mit der Informationen der Tiefenkamera kann dann die Blickrichtung bestimmt werden.

Der Betriebszustand kann insbesondere einen Aktivierungszustand, einen Bearbeitungsfortschritt oder einen Betriebsmodus des Hausgeräts 105 umfassen. Der Sensor 130 arbeitet bevorzugt optisch und kann eine Lichtquelle, insbesondere für unsichtbares Licht wie Infrarotlicht, umfassen. Der Sensor 130 kann zur Bestimmung eines Bildes mit Tiefeninformationen eingerichtet sein, also eines Bildes mit Bildpunkten, für die jeweils bestimmt wird, wie weit sich ein durch einen Bildpunkt repräsentierter Gegenstand vom Sensor 130 entfernt befindet. Die Entfernung kann auf der Basis der Ausbreitungsgeschwindigkeit von Licht (TOF: Time Of Flight), auf der Basis einer Phasenverschiebung eines an der Sache reflektierten Lichtstrahls im Vergleich zu einem direkten Lichtstrahl, oder auf der Basis einer Stereo-Aufnahme bestimmt werden. Für die Stereo-Aufnahme können zwei Kameras in einem vorbestimmten Abstand, der Basislinie, auf einen gemeinsamen Bereich gerichtet sein. Entfernungen können dabei mittels Triangulation bestimmt werden.

Der Sensor 130 ist bevorzugt dazu eingerichtet, ein Auge des Benutzers 115 abzutasten und eine Blickrichtung 140 zu bestimmen. Dazu können eine Position des Auges bzw. des Benutzers 115 und eine Ausrichtung des Auges bestimmt werden. Der Sensor 130 ist bevorzugt fest im Haushalt 110 angebracht, beispielsweise an einem Möbel, einer Wand oder dem Hausgerät 105. Die Position und die Ausrichtung des Auges des Benutzers 115 werden bevorzugt bezüglich des Haushalts 110 bestimmt, also in einem Koordinatensystem, das am Haushalt 110 orientiert ist. Auf der Basis der Blickrichtung 140, gegebenenfalls unter Zuhilfenahme der Position des Auges, kann der Sensor 130 oder die Verarbeitungseinrichtung 125 ein Objekt 145 bestimmen, das der Benutzer 105 anblickt. Das Objekt 145 ist üblicherweise ein intransparenter Gegenstand, der auf einer vom Auge des Benutzers 105 ausgehenden Halbgerade entlang der Blickrichtung 140 am nächsten am Benutzer 105 liegt. Das Objekt 145 kann unterschiedliche Ausdehnungen aufweisen; in einer Variante kann es sich um einen handhabbaren Gegenstand wie einen Apfel oder einen Kochlöffel handeln, während es in einer zweiten Variante einen Abschnitt eines Gegenstands repräsentieren kann, insbesondere eine Position auf einer Oberfläche eines Gegenstands. Für die Zwecke der hierin vorgestellten Technik kann diese Position, und damit die Ausdehnung des Objekts 145, in dieser Variante als beliebig klein angenommen werden.

Das Objekt 145 kann Teil eines Anzeigebereichs 150 sein, der durch das Hausgerät 105 oder die Vorrichtung 110 steuerbar sein kann. Beispielsweise kann ein auf dem Anzeigebereich 150 dargestelltes Bild mittels eines Projektors oder einer graphischen Anzeige gesteuert werden. Das Bild kann beliebige Informationen tragen und beispielsweise eine Fotografie oder einen Text umfassen. In einer Variante kann das Bild ein virtuelles Bedienelement umfassen, welches mit einer vorbestimmten Funktion verknüpft sein kann. Blickt der Benutzer 105 das Bedienelement an, so kann die Funktion ausgelöst und dadurch das Hausgerät 105 gesteuert werden. Das Bedienelement kann beispielsweise graphisch gekennzeichnet sein. Bevorzugt kann das Bedienelement dynamisch in Form, Größe, Form oder zugeordneter Funktion beeinflusst werden, insbesondere auf der Basis des Betriebszustands des Hausgeräts 105 oder einer bevorstehenden Tätigkeit im Zusammenhang mit dem Hausgerät 105. Das Bedienelement kann einer wiederzugebenden Information überlagert oder von ihr getrennt sein.

Die Verarbeitungseinrichtung 125 kann noch mit einer oder mehreren Eingabe- und/oder Ausgabevorrichtungen zur Interaktion mit dem Benutzer 115 verbunden sein. Exemplarisch sind als Eingabevorrichtung ein Mikrofon 155 und als Ausgabevorrichtung ein Lautsprecher 160 dargestellt, die insbesondere zur natürlich sprachlichen Ein- und/oder Ausgabe eingerichtet sein können.

Die Vorrichtung 120 kann eine Kommunikationsvorrichtung 165 umfassen, die eine Kommunikation mit einer entfernten Stelle 170 erlauben kann. Die Stelle 170 kann beispielsweise als Server oder als Dienst in einer Cloud realisiert sein und einen Teil der Verarbeitungen, die zur Bestimmung einer Intention des Benutzers 115 erforderlich sind, durchführen. Insbesondere kann die Stelle 170 eine Spracherkennung oder Sprachsynthese durchführen. Die Kommunikation zwischen der zentralen Stelle 170 kann ein Datennetzwerk wie das Internet oder ein Mobilfunknetz verwenden. Ein Teil der Kommunikationsstrecke zwischen der Vorrichtung 120 und der Stelle 170 kann drahtlos überbrückt sein.

In einer Ausführungsform steht die zentrale Stelle 170 mit einem weiteren Hausgerät 105 des gleichen Haushalts 110 in kommunikativer Verbindung. Eine erfasste Intention des Benutzers 115 kann zur Steuerung mehrerer Hausgeräte 105 führen. Ein Betriebszustand eines Hausgeräts 105 kann auf dem gleichen Weg den Betriebszustand eines anderen Hausgeräts 105 steuern. Beispielsweise kann ein Herd bei Auftreten von Rauch in diesem Bereich abgeschaltet werden, und in der Folge kann eine Dunstabzugshaube über dem Herd eingeschaltet werden, um den Rauch abzusaugen. Außerdem können seitens der Stelle 170 Informationen bereitgestellt werden, auf deren Basis eines der Hausgeräte 105 gesteuert werden kann. Diese Informationen können beispielsweise eine Gewohnheit, Vorgabe oder Vorliebe des Benutzers 115 bezüglich einer Verwendung des Hausgeräts 105 umfassen.

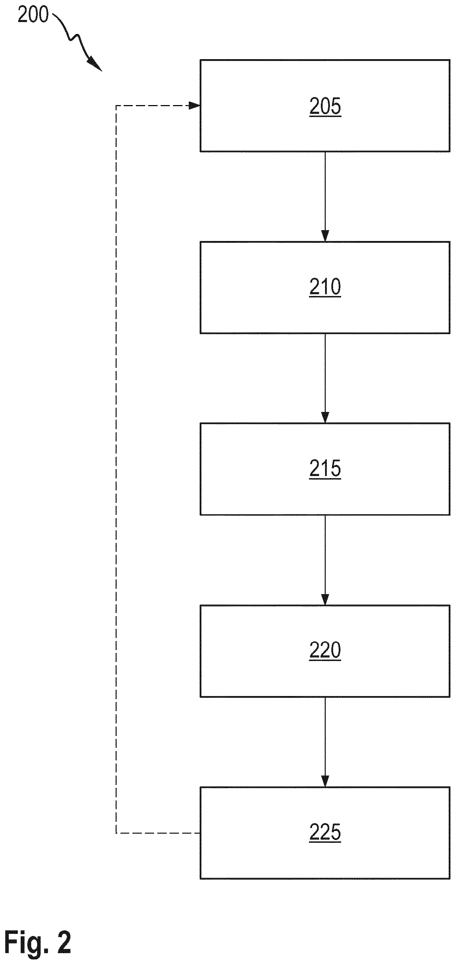

Figur 2 zeigt ein Ablaufdiagramm eines Verfahrens 100 zum Steuern eines Hausgeräts 105. Das Verfahren kann insbesondere im Zusammenhang mit dem System 100 von Figur 1 durchgeführt werden.

In einem Schritt 205 wird ein Betriebszustand des Hausgeräts 105 erfasst. In einem Schritt 210 wird eine Blickrichtung 140 des Benutzers 115 bestimmt. Dazu kann zunächst bestimmt werden, ob sich der Benutzer 115 in einem Abtastbereich des Sensors 130 befindet. Ist dies der Fall, so kann sein Auge abgetastet werden. Aus den abgetasteten Informationen kann dann die Blickrichtung 140 bestimmt werden.

Bevorzugt wird in einem Schritt 215 ein Objekt 145 bestimmt, das der Benutzer 115 anblickt. Dazu kann zunächst eine Position des Benutzers 115 oder seines Auges bestimmt werden. Außerdem kann der Haushalt 110 abgetastet werden, um mögliche Objekte 145 zu identifizieren, die im Bereich der bestimmten Blickrichtung 140 liegen.

In einem Schritt 220 kann eine weitere Äußerung des Benutzers 115 abgetastet werden, die in Zusammenhang mit der Bedienung oder Verwendung des Hausgeräts 105 steht. Beispielsweise kann eine akustische Anweisung erfasst werden, die ein Anblicken eines Objekts 145 begleiten kann. Die Äußerung kann lokal durch die Verarbeitungseinrichtung 125 verarbeitet oder zur Analyse an die Stelle 170 übermittelt werden, die ein Ermittlungsergebnis an die Vorrichtung 120 rückübermitteln oder eine Steuerung des Hausgeräts 105 unmittelbar durchführen kann.

Im Folgenden werden einige exemplarische Anwendungsfälle einer hierin vorgestellten Technik genauer vorgestellt. Es ist zu beachten, dass Merkmale oder Vorteile, die bezüglich eines der Anwendungsfälle gegeben werden, auf einen anderen Anwendungsfall übertragen werden können. Außerdem können Elemente der Anwendungsfälle miteinander kombiniert werden, insbesondere durch Steuerung mittels der Vorrichtung 110 oder der zentralen Stelle 170.

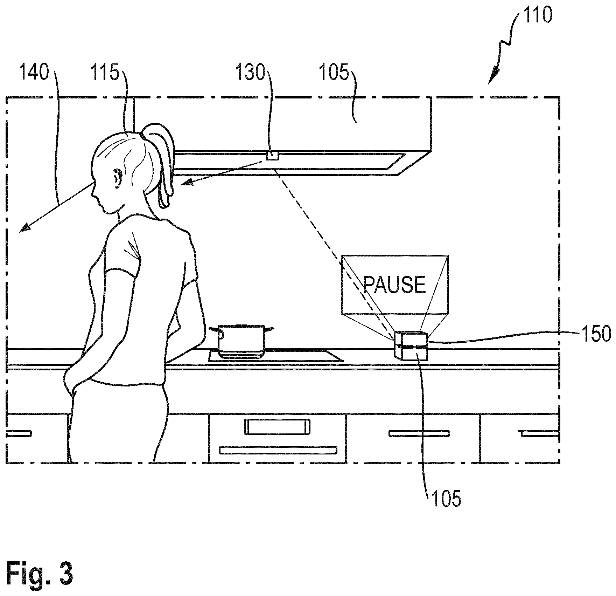

Figur 3 zeigt einen ersten Anwendungsfall, in dem das Hausgerät 105 ein eigenständiges Gerät mit einem Projektor 150 umfasst. Insbesondere kann das Hausgerät 105 einen sozialen Assistenten umfassen, der dazu eingerichtet ist, sich an das Verhalten eines Benutzers 115 und/oder seine aktuelle Stimmung oder ein aktuelles Bedürfnis anzupassen. Das Gerät 105 ist dazu eingerichtet, mittels des Projektors 150 Informationen auf einer Oberfläche darzustellen, beispielsweise auf einer Wand oder einem Fliesenspiegel. Die Vorrichtung 120 kann vom Hausgerät 105 umfasst oder separat angeordnet sein. In der Darstellung von Figur 1 ist nur der Sensor 130 sichtbar, der hier beispielhaft an einem weiteren Hausgerät 105, nämlich einer Dunstabzugshaube angebracht ist.

Die Wiedergabe von Informationen mittels des Projektors 150 kann in Abhängigkeit der bestimmten Blickrichtung 140 des Benutzers 115 gesteuert werden. Insbesondere kann die Wiedergabe eines Stroms von Informationen unterbrochen oder abgebrochen werden, wenn der Benutzer 115 länger als eine vorbestimmte Zeitspanne nicht in Richtung des projizierten Bilds blickt. Die Wiedergabe kann etwa wieder aufgenommen werden, wenn der Benutzer 115 länger als eine weitere vorbestimmte Zeitspanne in Richtung des Orts blickt, an den der Projektor 150 projizieren kann. Das Stoppen oder Starten der Wiedergabe kann zusätzlich von einer weiteren Äußerung des Benutzers 115 abhängig sein. Diese Äußerung kann etwa eine stimmliche Äußerung oder eine Geste, eine Kopfhaltung oder Kopfbewegung umfassen, die mittels einer Kamera oder des Sensors 130 abgetastet werden kann.

Einer Steuerung des Hausgeräts 105 nach Bestimmen einer vorbestimmten Blickrichtung 140, beispielsweise einem Beginnen oder Beenden einer Wiedergabe von Informationen mittels des Projektors 150, kann eine Bestätigungsanfrage vorausgehen. Die Bestätigungsanfrage kann beispielsweise akustisch mittels des Lautsprechers 160 ausgegeben werden. Eine Antwort des Benutzers 115 kann auf beliebige Weise erfolgen, beispielsweise akustisch. Eine entsprechende Bestätigungsanfrage kann vor dem Anhalten oder Abbrechen der Wiedergabe, wenn die Blickrichtung 140 des Benutzer 115 länger nicht den Projektionsbereich des Projektors 150 trifft, gestellt und eine entsprechende Bestätigung vor einer Steuerung des Hausgeräts 105 ausgewertet werden. Durch die Bestimmung zweier Äußerungen des Benutzers 115 kann eine irrtümliche Steuerung des Hausgeräts 105 vermieden werden.

Der Sensor 130 kann manuell durch den Benutzer 115 aktiviert werden oder permanent aktiviert sein. Zur Kalibrierung des Sensors 130 kann der Benutzer 115 gebeten werden, an einen vorbestimmten Punkt im Projektionsfeld des Projektors 150 zu blicken. Einer oder mehrere solche Punkte nacheinander können mittels des Projektors 150 dargestellt werden. Alternativ kann der Benutzer 115 gebeten werden, an einen anderen ausgezeichneten Punkt zu blicken, beispielsweise in eine Ecke einer Wand. Die Blickrichtung 140 des Benutzers 115 kann durch die Vorrichtung 110 oder, nach einer entsprechenden Datenübermittlung, durch die zentrale Stelle 170 erfolgen. Die Übermittlung von Sensordaten oder ermittelten Blickrichtungen 140 an die Stelle 170 kann bedarfsgesteuert, permanent oder periodisch erfolgen.

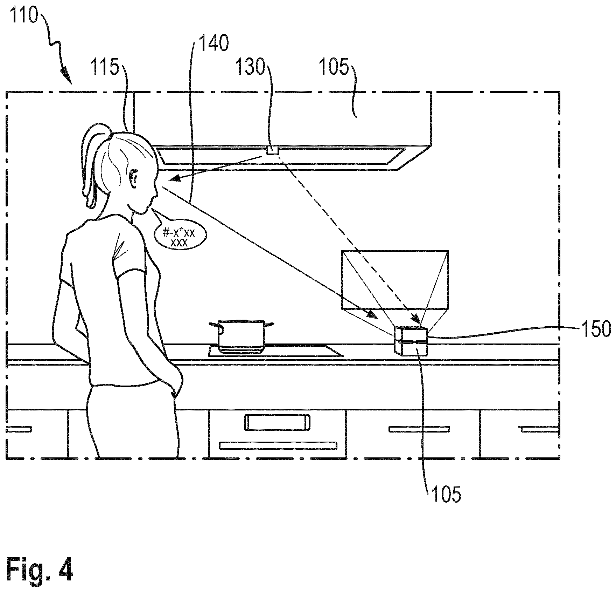

Figur 4 zeigt einen zweiten Anwendungsfall, in dem das Hausgerät 105 wieder ein eigenständiges Gerät mit einem Projektor 150 umfasst. Zusätzlich zu der Ausführungsform von Figur 3 kann die Vorrichtung 110 dazu eingerichtet sein, eine Bewegung von Lippen des Benutzers 115 abzutasten. Dazu kann eine dedizierte Kamera oder der Sensor 130 verwendet werden. Bevorzugt wird jedoch optisch erfasst, dass ein Blickkontakt des Benutzers 115 zur Vorrichtung 110 besteht und der Benutzer 115 spricht. Der Sprachinhalt kann dann mittels eines Mikrofons abgetastet werden.

In einer Ausführungsform ist eine Spracherkennung realisiert, die dann aktiviert werden kann, wenn der Benutzer 115 seinen Blick in eine vorbestimmte Blickrichtung 140 oder auf ein vorbestimmtes Objekt 145 lenkt und gleichzeitig spricht. Das Sprechen kann auf der Basis der Lippenbewegung und/oder mittels des Mikrofons 155 abgetasteten Daten bestimmt werden. Ein Signalwort zur Aktivierung der Spracherkennung muss der Benutzer 115 nicht sprechen. Das Hausgerät 105 kann anzeigen, dass es den Beginn einer Spracheingabe erfasst hat, beispielsweise durch einen Signalton oder eine optische Anzeige.

Die Blickrichtung, die Lippenbewegung oder eine Mimik des Benutzers 115 können insbesondere mittels einer gemeinsamen Analyse auf der Basis eines Bilds oder Bilderstroms eines Gesichts des Benutzers 115 mit Tiefeninformationen bestimmt werden. Diese Analyse kann seitens der Vorrichtung 120 oder der Stelle 170 durchgeführt werden. Die akustischen Informationen können auf der Basis der Lippenbewegungen, der Mimik und/oder der Blickrichtung ausgewertet werden. Eine Intention des Benutzers 115 kann bestimmt und das Hausgerät 105 entsprechend gesteuert werden.

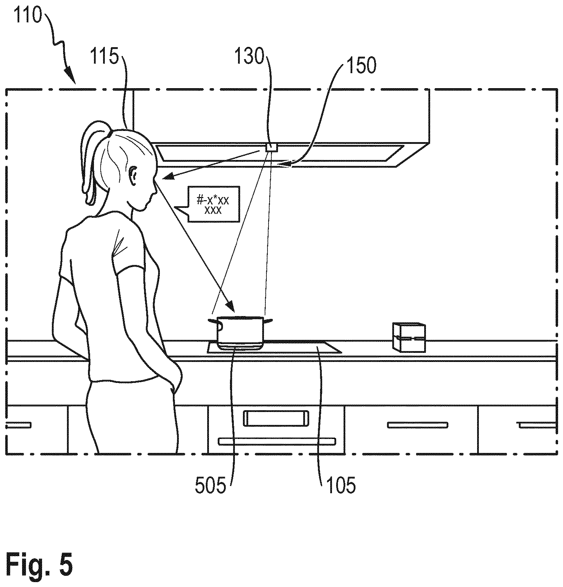

Figur 5 zeigt einen dritten Anwendungsfall, in dem das Hausgerät 105 einen Herd umfasst. Optional kann ein Projektor 150 vorgesehen sein, der auf den Herd 105 gerichtet ist. Der Projektor 150 und der Sensor 130 sind bevorzugt oberhalb des Herds 105, beispielsweise an einer Wand oder einer Dunstabzugshaube, angebracht. Die Vorrichtung 120 kann permanent aktiv sein, manuell durch den Benutzer 115 ein- oder ausgeschaltet werden oder immer dann aktiv werden, wenn die Dunstabzugshaube eingeschaltet wird. Die Blickrichtung 140 des Benutzers 115 kann bestimmt werden, solange der Benutzer 115 kocht, sich im Bereich des Herdes 105 aufhält, oder die Vorrichtung 110 eingeschaltet ist.

Der Projektor 150 kann ein Objekt 145, das der Benutzer 115 anblickt, optisch hervorheben, beispielsweise durch einen Lichtfleck in einer vorbestimmten Farbe. Beispielsweise durch längeres Anblicken kann der Benutzer 115 ein auf dem Herd 105 abgestelltes Kochgefäß 505 auswählen, sodass nachfolgend eine Funktion des Herds 105 gesteuert werden kann, die auf das ausgewählte Kochgefäß 505 wirkt. Das Auswählen des Kochgefäßes kann signalisiert werden, indem eine Farbe des Lichtflecks verändert wird, beispielsweise von grün auf blau oder von gelb auf rot. Die Funktion kann insbesondere eine Heizleistung des Herdes 105 umfassen. Die Steuerung der Heizleistung erfolgt bevorzugt berührungslos, beispielsweise mittels Spracheingabe, wie oben beschrieben wurde. Beispielhafte gesprochene Anweisungen umfassen "Kochen auf Stufe sechs" oder "Köcheln auf Stufe 4" oder "Stopp" zum Abstellen.

Eine Kalibrierung der Vorrichtung kann bezüglich des Herdes 105 vorgenommen werden. Dazu kann der Benutzer 115 gebeten werden, seinen Blick einem Lichtfleck des Projektors 150 im Bereich der Oberfläche des Herdes 105 folgen zu lassen. Ein Kochgefäß 505 auf dem Herd 105 kann mittels einer Kamera oder dem Sensor 130 bestimmt werden. der Projektor 150 kann einen Umriss eines Kochgefäßes 550 optisch hervorheben. Auch andere Gegenstände können in ähnlicher Weise erfasst und gegebenenfalls hervorgehoben werden, beispielsweise ein Löffel oder eine Kelle.

Die durch Blickrichtungsbestimmung unterstützte Steuerung des Herdes 105 kann eine einfache und genaue Steuerung zulassen, die ohne manuelle Bedienung auskommen kann. Der Benutzer 115 kann erleichtert mehrere Vorgänge gleichzeitig kontrollieren, wie das beim Kochen häufig erforderlich ist.

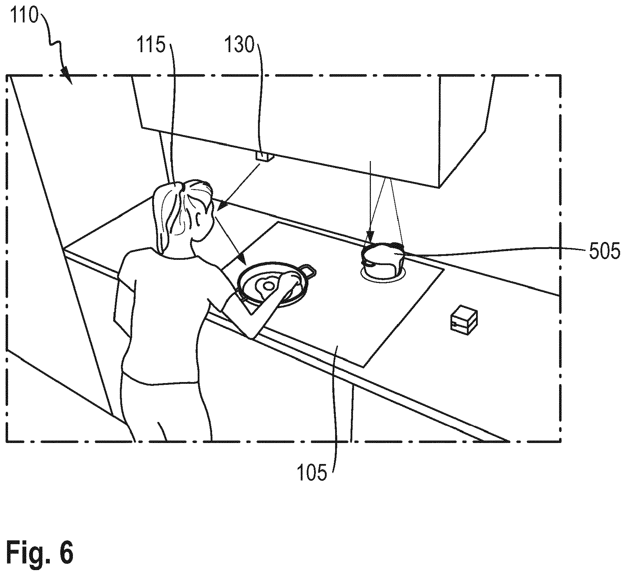

Figur 6 zeigt einen vierten Anwendungsfall, in dem das Hausgerät 105 wie bei der Ausführungsform von Figur 5, einen Herd umfasst. Hierbei kann eine Dauer bestimmt werden, über die der Benutzer 115 seinen Blick nicht auf ein vorbestimmtes Kochgefäß 505 auf dem Herd 105 gerichtet hat. Blickt der Benutzer 115 auf das Kochgefäß 505, so kann die bestimmte Dauer wieder auf null gesetzt werden. Übersteigt die Dauer einen vorbestimmten Schwellenwert, so kann eine Warnung an den Benutzer 115 ausgegeben werden, beispielsweise eine akustische Warnung mittels des Lautsprechers 160. Die Warnung kann einen Signalton oder eine gesprochene Nachricht umfassen.

In einer weiteren Ausführungsform können eine Kamera oder ein Feuchtigkeitssensor vorgesehen sein, um zu bestimmen, dass eine Speise im Kochgefäß 505 kocht oder überkocht. Sollte dies der Fall sein, während der Benutzer 115 seinen Blick nicht auf das Kochgefäß richtet, so kann eine Warnung ausgegeben werden. In noch einer weiteren Ausführungsform kann eine Bilderkennung eines vom Inhalt des Kochgefäßes aufgenommenen Bilds durchgeführt werden. Sollte beispielsweise ein Bräunungsgrad einer Kartoffel einen vorbestimmten Wert erreichen und der Benutzer 115 länger als eine vorbestimmte Dauer nicht in das Kochgefäß blicken, so kann eine weitere Warnung ausgegeben werden. Diese Ausführungsform kann auch zur Unterstützung der schrittweisen Abarbeitung eines Rezepts durch den Benutzer 115 verwendet werden.

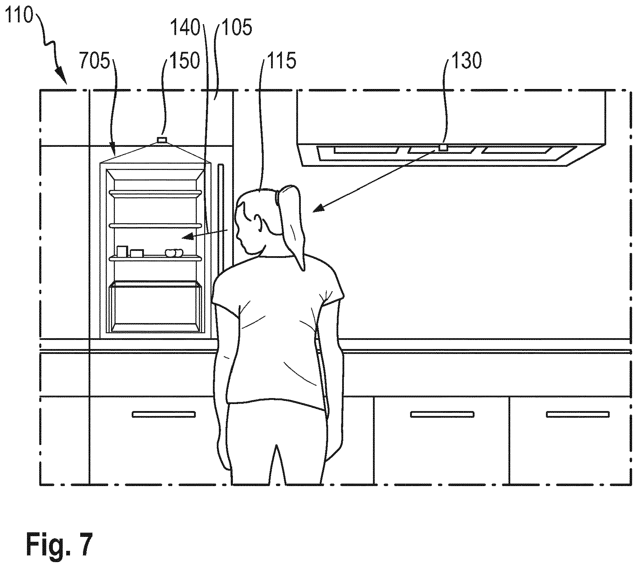

Figur 7 zeigt einen fünften Anwendungsfall, in dem das Hausgerät 105 ein Kühlgerät umfasst. Das Kühlgerät 105 kann insbesondere einen Kühlschrank, einen Gefrierschrank oder eine Kombination aus beiden umfassen. In einem Innenraum des Kühlgeräts 105 können Nahrungsmittel aufgenommen sein. Auf einer Außenseite des Kühlgeräts 105 kann eine Anzeigevorrichtung 150 oder ein Projektor vorgesehen sein. Bevorzugt kann so ein Bild auf einer Wand oder Tür der Kühlvorrichtung 105 dargestellt werden. Die Anzeigevorrichtung 150 kann so gestaltet sein, dass sie sich optisch unauffällig in die Kühlvorrichtung integriert, solange sie kein Bild darstellt.

Im Innenraum des Kühlgeräts 105 können eine oder mehrere Kameras 705 zur optischen Erfassung des Inhalts vorgesehen sein. Der Benutzer 115 kann einen Einblick in den Inhalt der Kühlvorrichtung 105 erhalten, indem er seinen Blick auf ein vorbestimmtes Objekt 145 richtet, das insbesondere am Kühlgerät 105 liegt. Zusätzlich können Lippenbewegungen und/oder sprachliche Anweisungen des Benutzers 115 abgetastet werden. In Abhängigkeit der abgetasteten Informationen kann ein mittels einer der Kameras 705 aufgenommenes Bild aus dem Innenraum des Kühlgeräts 105 auf der Außenseite angezeigt werden. Der Benutzer kann die Darstellung beispielsweise durch einen Sprachbefehl, eine Geste oder eine Kopfhaltung beeinflussen. So können unterschiedliche Perspektiven oder Bildausschnitte ausgewählt werden. Eine mögliche Anweisung lautet "zeige Inhalt von Ablage zwei". Eine Kamera 705 im Bereich von Ablage zwei kann daraufhin ein Bild anfertigen, das auf der Anzeigevorrichtung 150 dargestellt werden kann. Die Bestimmung der Benutzerintention kann seitens der Vorrichtung 120 oder der Stelle 170 durchgeführt werden.

Durch die Blickrichtungserkennung kann der Inhalt des Kühlgeräts 105 auf dessen Außenseite angezeigt werden. Der Inhalt kann so schneller durch den Benutzer 115 optisch aufgenommen werden. Außerdem kann beispielsweise während des Suchens einer bestimmten Sache im Innenraum der Kühlvorrichtung dessen Tür oder Deckel geschlossen bleiben, sodass der Innenraum kühl bleibt. Durch die Anbringung der Anzeigevorrichtung 150 unmittelbar an der Kühlvorrichtung kann eine große mögliche Anzeigefläche ausgenutzt werden. Anders als bei einer Lösung, die ein Bild des Innenraums auf einem Mobilgerät darstellt, kann eine handfreie Bedienung realisiert sein.

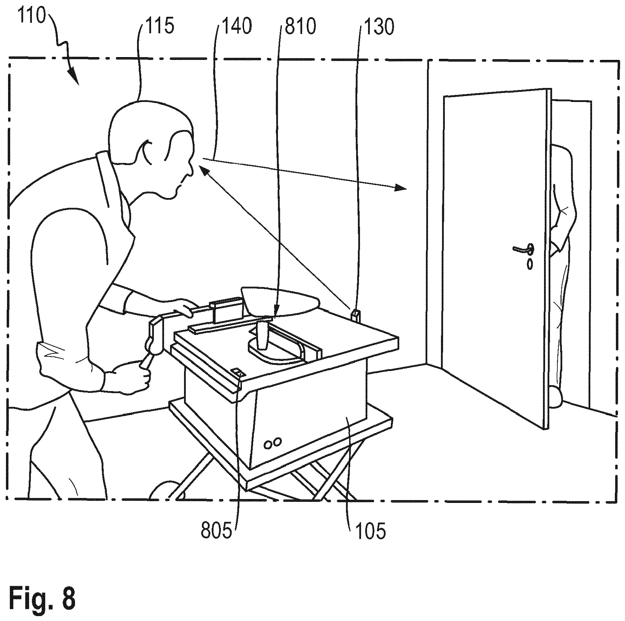

Figur 8 zeigt einen sechsten Anwendungsfall, in dem das Hausgerät 105 ein Elektrowerkzeug umfasst. Rein exemplarisch handelt es sich hier um eine Kreissäge, andere Elektrowerkzeuge 105 können ebenfalls umfasst sein.

Sobald das Elektrowerkzeug 105 in Betrieb genommen wird, kann mittels des Sensors 130 die Blickrichtung 140 des Benutzers 115 bestimmt werden. Solange der Benutzer 115 seinen Blick innerhalb eines vorbestimmten Bereichs hält, in welchem ein Arbeitsbereich des Elektrowerkzeugs 105 liegt, kann keine unmittelbare Gefahr bestimmt werden. Dieser Zustand kann beispielsweise mittels einer Signalleuchte 805 signalisiert werden, indem diese Licht mit einer vorbestimmte Farbe aussendet, beispielsweise grün. Der Arbeitsbereich des Elektrowerkzeugs 105 umfasst üblicherweise den Ort, an welchem eine Bearbeitung stattfindet, sowie bevorzugt einen vorbestimmten Bereich darum herum. Zusätzlich kann ein weiterer vorbestimmter Bereich umfasst sein, in welchem eine Bearbeitung bevorsteht. Im Fall der Kreissäge kann der Bearbeitungsbereich 810 insbesondere eine Schnittfläche eines Sägeblatts umfassen, der in einer oder mehreren Richtungen um einen vorbestimmten Sicherheitsbereich erweitert sein kann. In Schnittrichtung der Kreissäge kann der Bearbeitungsbereich 810 ebenfalls erweitert sein.

Sollte der Benutzer 115 seinen Blick aus dem Bearbeitungsbereich 810 nehmen, beispielsweise weil er abgelenkt ist, so kann ein zweiter Zustand bestimmt werden, in welchem Gefahr droht. Sofort oder nach Anlauf einer vorbestimmten Dauer, in welcher der Benutzer 115 seinen Blick nicht zurück auf den Bearbeitungsbereich 810 lenkt, kann eine Warnung ausgegeben werden, beispielsweise optisch und/oder akustisch. Die Signalleuchte 805 kann Licht in einer anderen Farbe aussenden, beispielsweise in rot. Alternativ dazu oder nach Ablauf einer weiteren Dauer, in welcher der Benutzer 115 seinen Blick nicht zurück auf den Bearbeitungsbereich 810 lenkt, kann das Elektrowerkzeug 105 in seiner Leistung reduziert oder abgeschaltet werden. Danach kann das Elektrowerkzeug 105 wieder in Betrieb genommen werden wie beim ersten Start.

Durch die Warnung bei Unaufmerksamkeit des Benutzers 115 gegenüber einer Bearbeitung mittels des Elektrowerkzeugs 105 können eine Verletzung des Benutzers 115 oder einer anderen Person im Bereich des Elektrowerkzeugs 105 vermieden werden.

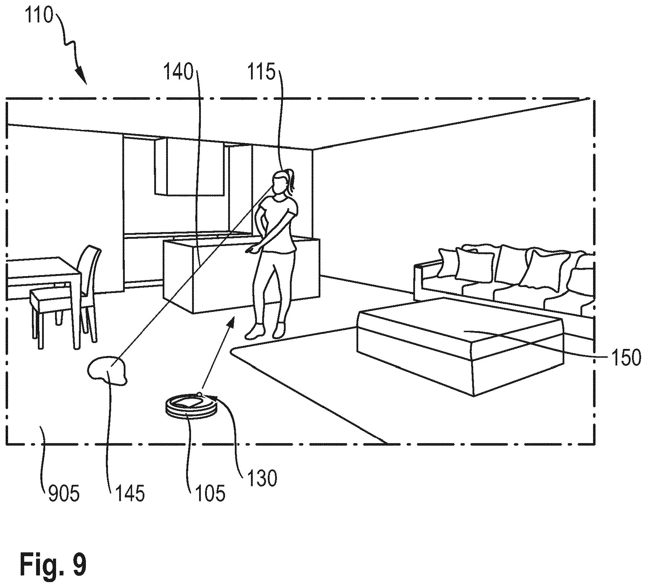

Figur 9 zeigt einen siebten Anwendungsfall, in dem das Hausgerät 105 ein Reinigungsgerät 105 zur Reinigung einer Bodenfläche 905 umfasst. Das Reinigungsgerät 105 kann insbesondere einen Wisch- oder Staubsaugroboter umfassen. Der Sensor 130 ist hier beispielhaft am Reinigungsgerät 105 angebracht, kann aber auch an einer beliebigen anderen Stelle im Haushalt 110 angebracht sein. In einer weiteren Ausführungsform ist der Sensor 130 am Kopf des Benutzers 115 angebracht, beispielsweise in Form einer Datenbrille. Die Datenbrille kann dem Benutzer 115 weitere Informationen bereitstellen, beispielsweise Kartendaten, auf deren Basis sich das Reinigungsgerät 105 im Haushalt 110 orientieren kann.

Der Benutzer 115 kann seinen Blick auf ein vorbestimmtes Objekt 145 richten um das Reinigungsgerät 105 zu veranlassen, das Objekt 145 zu reinigen. Dabei kann das Objekt 145 einen vorbestimmten Bereich um eine Position umfassen oder das Objekt 145 kann beispielsweise mittels Verfolgung der Blickrichtung 140 des Benutzers in seinen Umrissen bestimmt werden. Das Reinigungsgerät 105 kann auf eine Karte des Haushalts 110 zugreifen. Die Karte kann vorbestimmt oder mittels eines bordeigenen Sensors des Reinigungsgeräts 105 aufgestellt oder verbessert sein. Die Karte kann insbesondere dreidimensionale Informationen des Haushalts 110 umfassen. Zusätzlich können beispielsweise bewegliche oder unbewegliche Objekte, Bodentypen oder häufig stark verschmutzte Bereiche in der Karte vermerkt sein. In einer Ausführungsform ist die Karte mehreren Hausgeräten 105 zugänglich, beispielsweise indem sie seitens der zentralen Stelle 170 gespeichert ist.

Der Benutzer 115 kann an mehrere Objekte 145 oder Stellen der Bodenfläche blicken, um eine Reihe von zu reinigenden Bereichen zu bestimmen. Alternativ kann auch ein Bereich angegeben werden, den das Reinigungsgerät 105 meiden soll. Die Angabe der Bereiche kann beispielsweise mittels Sprach- oder Gestensteuerung unterstützt werden, beispielsweise um einen zu reinigenden von einem zu meidenden Bereich zu unterscheiden oder eine blickrichtungsgesteuerte Eingabe zu starten oder zu beenden.

### Bezugszeichen

- 100: System
- 105: Hausgerät
- 110: Haushalt
- 115: Benutzer
- 120: Vorrichtung
- 125: Verarbeitungseinrichtung
- 130: Sensor
- 135: Schnittstelle
- 140: Blickrichtung
- 145: Objekt
- 150: Anzeigebereich
- 155: Mikrofon
- 160: Lautsprecher
- 165: Kommunikationsvorrichtung
- 170: zentrale Stelle, Server, Dienst

- 200: Verfahren
- 205: Erfassen Betriebszustand Hausgerät
- 210: Abtasten Auge eines Benutzers und Bestimmen Blickrichtung
- 215: Bestimmen Position oder Objekt, das der Benutzer anblickt
- 220: Erfassen weiterer Äußerung des Benutzers
- 225: Steuern Hausgerät

- 505: Kochgefäß: Topf, Pfanne, Kasserolle, Rheine etc.

- 805: Signalleuchte
- 810: Bearbeitungsbereich

## Patentansprüche

1. Verfahren (200) zum Steuern eines Hausgeräts (105) in einem Haushalt (110), wobei das Verfahren (200) folgende Schritte umfasst:
- Erfassen (205) eines Betriebszustands des Hausgeräts (105);
- Abtasten (210) eines Benutzers (115);
- Bestimmen (210) einer Blickrichtung (140) des Benutzers (115);
- Steuern (225) des Hausgeräts (105) in Abhängigkeit des Betriebszustands und der erkannten Blickrichtung (140);
**dadurch gekennzeichnet, dass**
- das Hausgerät (105) einen Herd mit einer Oberfläche zum Abstellen eines Kochgefäßes (505) umfasst und
- in dem Schritt des Bestimmens der Blickrichtung des Benutzers die Blickrichtung (140) bezüglich der Oberfläche und/oder eines auf der Oberfläche abgestellten Kochgefäßes (505) bestimmt wird.

2. Verfahren (200) nach Anspruch 1, wobei die Blickrichtung auf der Basis einer Abtastung eines Auges des Benutzers (115) aus einer gegenüber dem Haushalt (110) festgelegten Position bestimmt wird.

3. Verfahren (200) nach Anspruch 1 oder 2, wobei ein Objekt (145) bestimmt wird, das der Benutzer (115) anblickt.

4. Verfahren (200) nach Anspruch 3, wobei das Objekt (145) eine vorbestimmte Steuerfläche umfasst und das Hausgerät (105) mittels einer der Steuerfläche zugeordneten, vorbestimmten Funktion gesteuert wird.

5. Verfahren (200) nach einem der vorangehenden Ansprüche, wobei das Hausgerät (105) in Richtung des durch den Benutzer (115) angeblickten Objekts (145) bewegt wird.

6. Verfahren (200) nach einem der vorangehenden Ansprüche, wobei das Hausgerät (105) zur Bearbeitung eines Objekts in einem Bearbeitungsbereich (810) eingerichtet ist und die Bearbeitung durch das Hausgerät (105) reduziert wird, falls bestimmt wird, dass die Blickrichtung (140) des Benutzers (115) außerhalb des Bearbeitungsbereichs (810) liegt.

7. Hausgerät (105), umfassend:
- eine erste Abtasteinrichtung (135) zur Erfassung eines Betriebszustands des Hausgeräts (105);
- eine zweite Abtasteinrichtung (130) zur Abtastung eines Benutzers (115);
- eine Verarbeitungseinrichtung (125), die dazu eingerichtet ist, eine Blickrichtung (140) des Benutzers (115) zu bestimmen und das Hausgerät (105) in Abhängigkeit des Betriebszustands und der erkannten Blickrichtung (140) zu steuern,
**dadurch gekennzeichnet, dass**
- das Hausgerät (105) einen Herd mit einer Oberfläche zum Abstellen eines Kochgefäßes (505) umfasst und die Blickrichtung (140) bezüglich der Oberfläche und/oder eines auf der Oberfläche abgestellten Kochgefäßes (505) bestimmt wird.

8. Hausgerät (105) nach Anspruch 7, wobei das Hausgerät (105) einen Projektor (150) zur Wiedergabe visueller Daten auf eine Fläche umfasst und die Wiedergabe von Daten durch den Projektor (150) gesteuert wird.

9. Hausgerät (105) nach Anspruch 7 oder 8, ferner umfassend eine Einrichtung (155) zur Erfassung einer gesprochenen Anweisung, wobei eine Anweisung nur erfasst wird, nachdem der Benutzer (115) ein vorbestimmtes Objekt (145) angeblickt hat.

10. Hausgerät (105) nach einem der Ansprüche 7 bis 9, wobei das Hausgerät (105) ein Kühlgerät mit einem Innenraum zur Aufnahme von Nahrungsmitteln umfasst, wobei das Kühlgerät (105) eine Kamera (705) zur Bereitstellung eines Bilds des Innenraums und eine Anzeigevorrichtung (150) zur Anzeige eines Bilds umfasst und das Anzeigen auf der Anzeigevorrichtung (150) gesteuert wird.

11. Hausgerät (105) nach einem der Ansprüche 7 bis 9, wobei das Hausgerät (105) ein Elektrowerkzeug umfasst und die Blickrichtung (140) bezüglich eines Arbeitsbereichs (810) des Elektrowerkzeugs bestimmt wird.

12. Hausgerät (105) nach einem der Ansprüche 7 bis 9, wobei das Hausgerät (105) ein Reinigungsgerät zur Reinigung einer Bodenfläche (905) umfasst, die Blickrichtung (140) bezüglich eines Abschnitts (145) der Bodenfläche (905) bestimmt wird und das Reinigungsgerät (105) zur Reinigung des Abschnitts (145) gesteuert wird.

## Claims

1. Method (200) for controlling a household appliance (105) in a household (110), wherein the method (200) comprises the following steps:
- acquiring (205) an operating state of the household appliance (105);
- scanning (210) a user (115);
- determining (210) a viewing direction (140) of the user (115);
- controlling (225) the household appliance (105) as a function of the operating state and the identified viewing direction (140);
**characterised in that**
- the household appliance (105) comprises a cooker with a surface for placing a cooking vessel (505) and
- in the step of determining the viewing direction of the user, the viewing direction (140) is determined in relation to the surface and/or a cooking vessel (505) placed on the surface.

2. Method (200) according to claim 1, wherein the viewing direction is determined on the basis of a scanning of an eye of the user (115) from a position specified in relation to the household (110).

3. Method (200) according to claim 1 or 2, wherein an object (145) is determined, which is being looked at by the user (115).

4. Method (200) according to claim 3, wherein the object (145) comprises a predetermined control area and the household appliance (105) is controlled by means of a predetermined function assigned to the control area.

5. Method (200) according to one of the preceding claims, wherein the household appliance (105) is moved in the direction of the object (145) being looked at by the user (115).

6. Method (200) according to one of the preceding claims, wherein the household appliance (105) is configured for machining an object in a machining region (810) and the machining by way of the household appliance (105) is reduced if it is determined that the viewing direction (140) of the user (115) lies outside the machining region (810).

7. Household appliance (105), comprising:
- a first scanning facility (135) for acquiring an operating state of the household appliance (105);
- a second scanning facility (130) for scanning a user (115);
- a processing facility (125), which is configured to determine a viewing direction (140) of the user (115) and to control the household appliance (105) as a function of the operating state and the identified viewing direction (140),
**characterised in that**
- the household appliance (105) comprises a cooker with a surface for placing a cooking vessel (505) and the viewing direction (140) is determined in relation to the surface and/or a cooking vessel (505) placed on the surface.

8. Household appliance (105) according to claim 7, wherein the household appliance (105) comprises a projector (150) for rendering visual data on an area and the rendering of data is controlled by the projector (150).

9. Household appliance (105) according to claim 7 or 8, further comprising a facility (155) for acquiring a spoken instruction, wherein an instruction is only acquired once the user (115) has looked at a predetermined object (145).

10. Household appliance (105) according to one of claims 7 to 9, wherein the household appliance (105) comprises a refrigeration appliance with an inner compartment for accommodating foodstuffs, wherein the refrigeration appliance (105) comprises a camera (705) for providing an image of the inner compartment and a display apparatus (150) for displaying an image and the displaying is controlled on the display apparatus (150).

11. Household appliance (105) according to one of claims 7 to 9, wherein the household appliance (105) comprises an electric tool and the viewing direction (140) is determined in relation to an operating region (810) of the electric tool.

12. Household appliance (105) according to one of claims 7 to 9, wherein the household appliance (105) comprises a cleaning appliance for cleaning a floor area (905), the viewing direction (140) is determined in relation to a section (145) of the floor area (905) and the cleaning appliance (105) is controlled to clean the section (145).

## Revendications

1. Procédé (200) de commande d'un appareil ménager (105) dans un ménage (110), dans lequel le procédé (200) comprend les étapes suivantes :
- détection (205) d'un état de fonctionnement de l'appareil ménager (105) ;
- balayage (210) d'un utilisateur (115) ;
- détermination (210) d'une direction du regard (140) de l'utilisateur (115) ;
- commande (225) de l'appareil ménager (105) en fonction de l'état de fonctionnement et de la direction du regard (140) identifiée ;
**caractérisé en ce que**
- l'appareil ménager (105) comprend une cuisinière ayant une surface destinée à poser un récipient de cuisson (505), et
- **en ce qu'**à l'étape de la détermination de la direction du regard de l'utilisateur, la direction du regard (140) est déterminée par rapport à la surface et/ou à un récipient de cuisson (505) posé sur la surface.

2. Procédé (200) selon la revendication 1, dans lequel la direction du regard est déterminée sur la base d'une détection d'un œil de l'utilisateur (115) à partir d'une position fixe par rapport au ménage (110).

3. Procédé (200) selon la revendication 1 ou 2, dans lequel un objet (145) est déterminé, lequel est observé par l'utilisateur (115).

4. Procédé (200) selon la revendication 3, dans lequel l'objet (145) comprend une surface de commande prédéfinie et dans lequel l'appareil ménager (105) est commandé au moyen d'une fonction prédéfinie attribuée à la surface de commande.

5. Procédé (200) selon l'une quelconque des revendications précédentes, dans lequel l'appareil ménager (105) est déplacé en direction de l'objet (145) observé par l'utilisateur (115).

6. Procédé (200) selon l'une quelconque des revendications précédentes, dans lequel l'appareil ménager (105) est configuré pour le traitement d'un objet dans une zone de traitement (810), et dans lequel le traitement par l'appareil ménager (105) est réduit au cas où il est déterminé que la direction du regard (140) de l'utilisateur (115) est située en dehors de la zone de traitement (810).

7. Appareil ménager (105) comprenant :
- un premier dispositif de balayage (135) destiné à détecter un état de fonctionnement de l'appareil ménager (105) ;
- un deuxième dispositif de balayage (130) destiné à balayer un utilisateur (115) ;
- un dispositif de traitement (125) qui est configuré pour déterminer une direction du regard (140) de l'utilisateur (115) et pour commander l'appareil ménager (105) en fonction de l'état de fonctionnement et de la direction du regard (140) identifiée,
**caractérisé en ce que**
- l'appareil ménager (105) comprend une cuisinière ayant une surface destinée à poser un récipient de cuisson (505) et **en ce que** la direction du regard (140) est déterminée par rapport à la surface et/ou à un récipient de cuisson (505) posé sur la surface.

8. Appareil ménager (105) selon la revendication 7, dans lequel l'appareil ménager (105) comprend un projecteur (150) pour la reproduction de données visuelles sur une surface et dans lequel la reproduction de données est commandée par le projecteur (150).

9. Appareil ménager (105) selon la revendication 7 ou 8, comprenant en outre un dispositif (155) destiné à détecter une instruction parlée, dans lequel une instruction est seulement détectée après que l'utilisateur (115) ait observé un objet (145) prédéfini.

10. Appareil ménager (105) selon l'une quelconque des revendications 7 à 9, dans lequel l'appareil ménager (105) comprend un appareil frigorifique ayant un espace intérieur destiné à loger des aliments, dans lequel l'appareil frigorifique (105) comprend une caméra (705) pour la fourniture d'une image de l'espace intérieur et un dispositif d'affichage (105) pour afficher une image, et dans lequel l'affichage sur le dispositif d'affichage (150) est commandé.

11. Appareil ménager (105) selon l'une quelconque des revendications 7 à 9, dans lequel l'appareil ménager (105) comprend un outil électrique, et dans lequel la direction du regard (140) est déterminée par rapport à une zone de travail (810) de l'outil électrique.

12. Appareil ménager (105) selon l'une quelconque des revendications 7 à 9, dans lequel l'appareil ménager (105) comprend un appareil de nettoyage pour le nettoyage d'une surface de sol (905), dans lequel la direction du regard (140) est déterminée par rapport à une section (145) de la surface de sol (905), et dans lequel l'appareil de nettoyage (105) est commandé pour le nettoyage de la section (145).
